# FASCICULE DE BREVET EUROPEEN

(11) **EP 0 673 757 B1**
(45) Date de publication et mention de la délivrance du brevet: **24.05.2000**
(21) Numéro de dépôt: 95400621.9
(22) Date de dépôt: 21.03.1995
(51) Int. Cl.: B32B 17/10, C03C 27/12

(54) **FEUILLE DE MATIERE PLASTIQUE MULTICOUCHE ET VITRAGE LA COMPRENANT**
MEHRSCHICHTIGE KUNSTSTOFFFOLIE UND DAMIT HERGESTELLTE VERBUNDGLASSCHEIBE
MULTILAYER PLASTIC SHEET AND LAMINATED GLASS INCLUDING SAME

(30) Priorité: 22.03.1994 FR 9403331
(43) Date de publication de la demande: 27.09.1995
(73) Titulaire: SAINT-GOBAIN VITRAGE, 92400 Courbevoie (FR); ASAHI GLASS, Chiyoda-Ku, Tokyo 100 (JP)
(72) Inventeur: Bravet, Jean-Louis, F-60150 Thourotte (FR); L'Her, Anne, F-75018 Paris (FR); Crux, Noel, F-60200 Compiegne (FR)
(74) Mandataire: Muller, René

(56) Documents cités:
- EP-A- 0 054 491
- EP-A- 0 463 747
- WO-A-90/13416
- GB-A- 1 382 186
- GB-A- 2 041 826

## Description

L'invention concerne une feuille de matière plastique comprenant au moins deux couches, destinée en particulier à la fabrication de vitrages feuilletés dits asymétriques dans lesquels elle est associée à un substrat monolithique ou feuilleté en verre.

Des vitrages asymétriques comprenant une feuille en matière plastique et un substrat en verre peuvent être utilisés notamment en tant que vitrages de véhicules, tels que pare-brise, vitrages latéraux, lunette arrière, toit ou pavillon de véhicule de transport terrestre, en tant que vitrages d'avion, en tant que vitrages pour bâtiments. Des vitrages asymétriques de ce type sont décrits par exemple dans les publications de brevet FR-A-2 398 606, EP-A-132 198.

La feuille de matière plastique utilisée dans ces vitrages asymétriques est généralement formée de plusieurs couches ou films de natures différentes. En effet cette feuille de matière plastique doit présenter des propriétés de surface telles que résistance à la rayure, résistance à l'abrasion, résistance à l'action et l'agression des agents extérieurs tels que des agents de nettoyage et agents atmosphériques. Elle doit présenter en outre des propriétés d'adhésion avec le substrat en verre. Elle doit encore le cas échéant présenter des propriétés d'absorbeur d'énergie, de résistance aux chocs et à la pénétration.

Toutes ces propriétés ne peuvent être remplies de manière satisfaisante par une couche unique de matière plastique. C'est pourquoi, comme indiqué précédemment, la feuille est formée généralement d'au moins deux couches ou films.

Un des problèmes rencontrés lors de la fabrication de vitrages feuilletés asymétriques est le problème de l'adhésion de la feuille de matière plastique avec le substrat en verre. Pour qu'un vitrage feuilleté soit considéré comme vitrage de sécurité, il est nécessaire que les forces d'adhésion entre le substrat en verre et la feuille de matière plastique soient comprises entre deux limites. En effet, et notamment lorsque la feuille de matière plastique doit remplir la fonction d'un absorbeur d'énergie et résister aux chocs, l'adhésion ne doit pas être trop forte pour éviter que la feuille de matière plastique ne soit détériorée en cas de bris du verre par les éclats et pour d'autre part que la feuille de matière plastique puisse se désolidariser partiellement du substrat en verre pour remplir pleinement sa fonction d'absorbeur d'énergie. D'un autre côté, l'adhésion ne doit pas être trop faible afin d'assurer le maintien entre eux des composants assemblés du vitrage feuilleté, dans toutes les conditions d'usage du vitrage asymétrique, c'est-à-dire dans des conditions très variables de température et d'humidité et de radiations solaires. En outre, l'adhésion doit se conserver dans le temps.

D'autre part, en cas de stockage prolongé de la feuille de matière plastique avant l'assemblage avec le substrat, le pouvoir adhésif de la feuille doit se conserver.

Pour résoudre ce problème d'adhésion, on a déjà proposé de traiter la surface du support en verre destinée à être au contact avec la feuille de matière plastique par une composition de primage contenant un agent de couplage verre/matière plastique, généralement un organo silane.

Le traitement de la surface du verre peut être réalisé par une pulvérisation ou un essuyage. Cette solution, si elle est satisfaisante en termes de résultat d'adhésion, a en revanche un inconvénient majeur : elle nécessite toujours au moins une opération supplémentaire pour le procédé d'assemblage. Elle nécessite alors une installation coûteuse en temps et en main d'oeuvre.

Pour résoudre le problème de l'adhésion, on a encore proposé d'incorporer un agent de couplage dans la composition de la couche de matière plastique adhésive destinée à venir au contact du substrat en verre. Une quantité d'organo-silane comprise entre 0,05 % et 0,2 % en poids du poids total de la couche de matière plastique adhésive procure généralement une adhésion suffisante dans la période qui suit l'assemblage. Une quantité plus importante d'organo silane peut procurer des valeurs d'adhésion trop fortes pouvant être préjudiciables aux propriétés d'absorbeur d'énergie et de résistance à la pénétration comme indiqué précédemment. Mais si les quantités convenables citées ci-dessus procurent une adhésion satisfaisante après l'assemblage, ces propriétés ne se conservent pas dans le temps, notamment lorsque le vitrage est placé dans des conditions de températures élevées et de forte humidité, et cela lorsque la couche adhésive présente une épaisseur inférieure à 50 µm environ.

L'invention obvie aux inconvénients cités.

L'invention propose une feuille de matière plastique destinée à être utilisée dans la fabrication d'un vitrage feuilleté. Cette feuille est définie à la revendication 1.

Lorsque la couche adhésive destinée à venir au contact du substrat en verre présente une épaisseur comprise entre 15 µm et 50 µm environ, il est possible selon une réalisation de l'invention de limiter l'incorporation de l'organo-silane à la seule couche adjacente. En effet, l'adhésion due à la couche adhésive directement après assemblage peut se révèler suffisante sans organo-silane. Et c'est l'organo-silane contenu initialement dans la couche adjacente qui par migration vers la couche adhésive et l'interface verre/couche adhésive procure une adhésion satisfaisante après vieillissement du vitrage.

En revanche lorsque la couche adhésive présente une épaisseur inférieure à 15 µm environ, l'invention envisage alors d'incorporer au moins un organo-silane aux compositions des deux couches, la couche adhésive et la couche adjacente.

En incorporant un organo-silane aux compositions des deux couches, à la fois à la composition de la couche adhésive destinée à venir au contact avec le substrat en verre et à la fois à la composition de la couche en matière plastique adjacente à la couche adhésive, on obtient d'une part l'adhésion recherchée après l'assemblage quelle que soit l'épaisseur de la couche adhésive et d'autre part la conservation de cette adhésion dans le temps et dans des conditions de température et d'humidité très variables.

Il semble que la bonne tenue de l'adhésion dans le temps soit due, comme indiqué précédemment, à une migration de l'organo-silane de la couche adjacente vers la couche adhésive au contact du substrat en verre, et finalement vers l'interface verre/matière plastique. La couche adjacente constitue en fait une sorte de réservoir pour l'organo-silane, ce qui assure le maintien de la liaison verre/matière plastique même lorsque la couche adhésive présente une faible épaisseur, inférieure à 50 µm environ.

L'invention s'applique donc avantageusement à une feuille de matière plastique dont la couche adhésive présente une faible épaisseur, inférieure à 50 µm , et de préférence comprise entre 2 et 20 µm, ce qui est souvent le cas lorsque cette couche adhésive n'a essentiellement que la fonction adhésive à assurer.

En tant qu'organo-silanes convenables, on peut utiliser des alcoxysilanes choisis parmi des vinylsilanes, des méthacrylsilanes, des époxysilanes et en particulier pour ces derniers le gamma-glycidoxypropyltriméthoxysilane, le béta- (3,4-époxycyclohexyl)-éthyltriméthoxysilane, le gamma-glycidoxypropyltriéthoxysilane, le béta-(3,4-époxycyclohexyl)-éthyltriéthoxysilane.

Ces organo-silanes doivent être peu réactifs ou non réactifs vis-à-vis des groupements fonctionnels présents dans les mélanges réactionnels ou les compositions aptes à former les couches de matière plastique, surtout la couche adjacente, de façon à pouvoir migrer vers l'interface verre/matière plastique. Ainsi, lorsqu'il s'agit de couches de polyuréthane, les organo-silanes utilisés ne doivent pas réagir avec les groupements isocyanates destinés à former des groupements uréthane. Les organo-silanes sont utilisés à raison de 0,01 à 0,5 % et de préférence de 0,05 à 0,2 % en poids du poids de la couche qui les contient.

On incorpore généralement le même organo-silane dans les deux couches de matière plastique, bien que l'incorporation d'organo-silanes différents dans les deux couches puisse également être réalisée selon l'invention.

La couche adhésive est de préférence choisie parmi les polyuréthanes thermoplastiques. Ce peut être aussi une couche à base de copolymères d'éthylène et d'acétate de vinyle (EVA). Comme indiqué précédemment, son épaisseur est faible, inférieure à 50 µm et souvent comprise entre 2 et 20 µm.

Des polyuréthanes thermoplastiques convenables sont décrits par exemple dans le document FR-A-2 398 606. Ils peuvent être préparés à partir de polyols longs di-fonctionnels de masse moléculaire généralement supérieure à 400, tels que des polyétherdiols, polyester-diols, polycaprolactonediols, polycarbonatediols, de diols courts tels que le 1,2-propanediol, le 1,3-propanediol, le 1,2-butanediol, le 1,3-butanediol, le 1,4-butanediol, le diméthyl-2,2-propanediol-1,3 (néopentylglycol), le 1,5-pentanediol, le 1,6-hexanediol, et de diisocyanates difonctionnels tels que le 1,6-hexanediisocyanate, le 2,2,4-triméthyl-1,6-hexanediisocyanate, le 2,4,4-triméthyl-1,6-hexanediisocyanate, le bis (4-isocyanatocyclohexyl) méthane, le bis (3-méthyl-4-isocyanato-cyclohexyl) méthane, le 2,2-bis (4-isocyanatocyclohexyl) propane, le 3-isocyanatométhyl-3,5,5-triméthylcyclohexylisocyanate.

La couche de matière plastique adjacente à la couche adhésive est choisie parmi les polyuréthanes thermoplastiques, les polyuréthanes thermodurcis, le polyvinylbutyral. Par polyuréthanes thermoplastiques, on entend ici des couches ou films à base de polyuréthane présentant un caractère thermoplastique, c'est-à-dire aussi bien les polyuréthanes purement thermoplastiques obtenu à partir de composants bifonctionnels, que les polyuréthanes pouvant présenter quelques liaisons de réticulation du fait qu'ils soient obtenus à partir de composants comprenant une faible proportion d'éléments de fonctionnalité supérieure à deux, par exemple des triols et/ou encore du fait qu'ils soient obtenus à partir d'un mélange réactionnel dans des conditions pouvant entrainer la formation de liaisons de réticulation.

Pour qu'elle puisse remplir son rôle de réservoir en organosilane, c'est-à-dire d'agent de couplage verre/matière plastique, cette couche adjacente présente généralement une épaisseur supérieure à celle de la couche adhésive. Elle présente de préférence une épaisseur supérieure à 100 µm.

Outre la couche adhésive et sa couche adjacente en matière plastique faisant fonction de réservoir en agent de couplage verre/plastique, la feuille de matière plastique peut comprendre d'autres couches ou films. Ainsi elle peut comprendre dans une forme préférée une couche de polyuréthane thermodurci (structure réticulée) en tant que couche de surface. Une couche de polyuréthane thermodurci convenable est par exemple une de celles décrites dans les publications de brevets FR-A-2 398 606 déjà cité, EP-A-190 517 ou encore JP-A-86-177 241 et JP-A-86-281 118. Ces couches de polyuréthanes thermodurcis peuvent être obtenues par coulée sur un support plan d'un mélange réactionnel d'un composant isocyanate comprenant au moins un isocyanate de fonctionnalité égale ou de préférence supérieure à 2 par exemple un biuret ou un isocyanurate de l'hexaméthylènediisocyanate, et d'un composant polyol comprenant au moins un polyol de fonctionnalité supérieure à 2, par exemple un polyétherpolyol de fonctionnalité 3 ou un polycaprolactonetriol.

La feuille de matière plastique peut aussi comprendre un film de polyéthylène terephtalate (PET).

L'invention concerne aussi un vitrage comprenant au moins un substrat en verre et la feuille de matière plastique décrite précédemment. Le verre peut être du verre non recuit, recuit ou trempé thermiquement ou chimiquement.

D'autres caractéristiques et avantages de l'invention apparaitront dans la description suivante d'exemples de réalisation.

### EXEMPLE 1

On fabrique une feuille de matière plastique comprenant trois couches de polyuréthane destinée à être assemblée avec un substrat monolithique en verre. Les trois couches de polyuréthane sont respectivement une couche de surface à base d'un polyuréthane thermodurci, une couche ayant des propriétés d'absorbeur d'énergie à base d'un polyuréthane à caractère thermoplastique adjacente à la troisième couche qui est une couche adhésive à base d'un polyuréthane thermoplastique.

Sur un support continu en verre ou en une matière plastique souple tendue telle qu'un film de polyéthylènetéréphtalate on coule un mélange réactionnel d'un composant isocyanate comprenant un trimère d'hexaméthylènediisocyanate et d'un composant polyol comprenant un poly-(ε-caprolactone)polyol trifonctionnel. L'épaisseur de la couche est d'environ 100 µm.

Sur cette première couche, on forme une seconde couche ayant des propriétés d'absorbeur d'énergie par coulée d'un mélange réactionnel d'un composant polyol comprenant au moins un polyol de masse moléculaire comprise entre 400 et 4000, au moins un diol court de masse moléculaire inférieure à 300, par exemple du 1,4-butanediol, et, à raison d'environ 10 parties en poids du composant polyol, un polycaprolactone triol, et d'un composant isocyanate comprenant du bis (4-isocyanatocyclohexyl) méthane. Au composant polyol on a incorporé du gamma-glycidoxypropyltriméthoxysilane à raison de 0,10 % en poids du poids total de la couche de polyuréthane. L'épaisseur de la couche est d'environ 900 µm.

Sur cette couche ayant des propriétés d'absorbeur d'énergie on amène un film de polyuréthane thermoplastique de 5 µm d'épaisseur obtenu à partir d'une solution d'une résine de polyuréthane elle-même obtenue à partir d'un composant polyol comprenant du poly (ε-caprolactone)polyol de masse moléculaire comprise entre 1000 et 2000, et de fonctionnalité 2 et du 1,4-butanediol, et d'un composant isocyanate comprenant un mélange de bis (4-isocyanatocyclohexyl) méthane et de 3-isocyanatométhyl-3,5,5-triméthylcyclohexylisocyanate. Dans la solution on a incorporé du gamma-glycidoxypropyltriméthoxysilane à raison de 0,10 % en poids du poids de la résine.

La feuille de matière plastique ainsi fabriquée est assemblée avec une feuille de verre de 3,5 mm d'épaisseur pour former un vitrage feuilleté asymétrique pouvant être utilisé en tant que pare-brise de sécurité pour un véhicule automobile. L'assemblage peut s'effectuer en deux étapes, une première étape consistant en un assemblage préliminaire obtenu par passage des éléments constitutifs du vitrage dans une calandreuse ou en variante dans un dispositif d'assemblage sous vide, et une seconde étape consistant en un cycle d'autoclave au cours duquel le vitrage est soumis durant 30 minutes à une pression d'environ 8 bars, et à une température d'environ 140°C.

Pour mesurer l'adhésion de la feuille de matière plastique avec le substrat en verre, on utilise la méthode du test de pelage réalisé sur des éprouvettes.

Trois test de pelage sont effectués : l'un 48 heures après l'assemblage, le deuxième après le test à l'eau bouillante (boil-test) qui consiste à placer l'échantillon pendant 2 heures dans de l'eau bouillante et le troisième après un test de vieillissement à la lampe xénon (selon la norme américaine SAE J 1885) (Weather-O-Meter test).

Dans ces tests de pelage, on mesure la force exercée perpendiculairement à la surface du substrat pour décoller un ruban de 1 cm de large découpé dans la feuille de matière plastique, à une vitesse de 50 mm/min.

On estime que l'adhésion est satisfaisante lorsque la force est supérieure ou égale à 15 N/cm.

Le premier test de pelage donne une valeur d'adhésion de 20 N/cm.

Le deuxième test est réalisé 10 jours après le boil-test. La valeur d'adhésion obtenue est de 20 N/cm.

Le troisième test est réalisé 48 heures après que l'échantillon ait subi 2000 heures de test au vieillissement.

La valeur d'adhésion est de 20 N/cm.

On peut noter la bonne conservation de l'adhésion après les différents tests.

### EXEMPLE COMPARATIF 1

On opère comme dans l'exemple 1 sauf qu'on n'incorpore pas d'organo-silane dans la couche ayant des propriétés d'absorbeur d'énergie, adjacente à la couche adhésive.

Les valeurs d'adhésion sont respectivement de 20 N/cm, 19 N/cm, 10 N/cm.

On note que l'adhésion après le test du vieillissement n'est plus satisfaisante.

### EXEMPLE COMPARATIF 2

On opère comme dans l'exemple 1 sauf qu'on n'incorpore pas d'organo-silane dans la couche adhésive.

Les valeurs d'adhésion sont respectivement de 14 N/cm, 25 N/cm, 18 N/cm.

L'adhésion initiale n'est pas satisfaisante.

### EXEMPLE COMPARATIF 3

On opère comme dans l'exemple 1 sauf qu'on n'incorpore pas d'organo-silane ni dans la couche adhésive, ni dans la couche adjacente.

Les valeurs d'adhésion sont respectivement de 5 N/cm, 0 N/cm, 5 N/cm.

Aucune adhésion n'est satisfaisante.

### EXEMPLE 2

On opère comme dans l'exemple 1 sauf qu'on incorpore 0,2 % en poids d'organo-silane dans chacune des deux couches : la couche adhésive et la couche adjacente.

Les valeurs d'adhésion sont respectivement de 21 N/cm, 30 N/cm, 24 N/cm.

### EXEMPLE COMPARATIF 4

On opère comme dans l'exemple 2 sauf qu'on n'incorpore pas d'organo-silane dans la couche adjacente.

Les valeurs d'adhésion sont : 23 N/cm, 20 N/cm, 10 N/cm.

L'adhésion après le vieillissement n'est pas satisfaisante.

### EXEMPLE COMPARATIF 5

On opère comme dans l'exemple 2 sauf qu'on n'incorpore pas d'organo-silane dans la couche adhésive.

Les valeurs d'adhésion sont :
14 N/cm, 25 N/cm, 20 N/cm.

L'adhésion initiale n'est pas satisfaisante. En revanche après le boil-test et le test de vieillissement, l'adhésion devient satisfaisante : l'organo-silane a pu vraisemblablement migrer dans la couche adhésive.

### EXEMPLE 3

On opère comme dans l'exemple 2 sauf qu'on utilise une couche adhésive de 10 µm d'épaisseur.

Les valeurs d'adhésion sont :
30 N/cm, 30 N/cm, 20 N/cm.

### EXEMPLE 4

On opère comme dans l'exemple 2 sauf qu'on utilise une couche adhésive de 15 µm d'épaisseur.

Les valeurs d'adhésion sont :
30 N/cm, 33 N/cm, 21 N/cm.

### EXEMPLE COMPARATIF 6

On opère comme dans l'exemple 4 sauf qu'on n'incorpore pas d'organo-silane dans la couche adjacente.

Les valeurs d'adhésion sont :
28 N/cm, 23 N/cm, 14 N/cm.

L'adhésion après le vieillissement n'est pas satisfaisante.

### EXEMPLE 5

On opère comme dans l'exemple 4 sauf qu'on incorpore pas d'organo-silane dans la couche adhésive.

Les valeurs d'adhésion sont :
20 N/cm, 37 N/cm, 22 N/cm.

L'adhésion initiale est satisfaisante bien qu'au départ la couche adhésive ne contienne pas d'organo-silane.

Ces essais montrent l'influence de l'incorporation d'un organo-silane agissant comme agent de couplage verre/matière plastique dans la couche adhésive et dans la couche adjacente vis-à-vis des forces d'adhésion entre le verre et la matière plastique.

L'adhésion après l'assemblage dépend exclusivement de l'épaisseur de la couche adhésive et de la concentration en organo-silane de cette couche.

La présence ou non d'organo-silane dans la couche adjacente a peu d'influence sur l'adhésion initiale.

En revanche après le test à l'eau bouillante et le test de vieillissement, le facteur qui parait le plus important est la concentration de l'organo-silane dans la couche adjacente. Ce résultat est dû semble-t-il à une migration importante de l'organo-silane contenue dans cette couche adjacente vers la couche adhésive et l'interface verre/matière plastique. Ce résultat est d'autant plus marqué que la couche adhésive présente une faible épaisseur.

## Revendications

1. Feuille de matière plastique destinée à être utilisée dans la fabrication d'un vitrage feuilleté comprenant un substrat en verre et ladite feuille, cette feuille comprenant au moins deux couches dont une couche adhésive destinée à venir au contact avec le substrat en verre et une autre couche, adjacente à la couche adhésive, caractérisée en ce que au moins la couche adjacente à la couche adhésive contient un agent de couplage comprenant au moins un organo-silane, qui est essentiellement non réactif avec d'éventuels groupes fonctionnels des composants de la couche adjacente.

2. Feuille selon la revendication 1, caractérisée en ce que la couche adjacente et la couche adhésive contiennent toutes deux un organo-silane.

3. Feuille selon une des revendications 1 ou 2, caractérisée en ce que la couche adjacente présente une épaisseur supérieure à celle de la couche adhésive.

4. Feuille selon une des revendications 1 à 3, caractérisée en ce que la couche adhésive présente une épaisseur inférieure à 50 µm.

5. Feuille selon la revendication 4, caractérisée en ce que la couche adhésive présente une épaisseur comprise entre 2 et 20 µm.

6. Feuille selon l'une des revendications 1 à 5, caractérisée en ce que l'organo-silane est choisi parmi les époxysilanes, les méthacrylsilanes, les vinylsilanes.

7. Feuille selon la revendication 6, caractérisée en ce que l'organo-silane est le gamma-glycidoxypropyltriméthoxysilane.

8. Feuille selon une des revendications 1 à 7, caractérisée en ce que l'organo-silane est utilisé à raison des 0,01 à 0,5 % du poids de la couche qui le contient.

9. Feuille selon une des revendications 1 à 8, caractérisée en ce que la couche adhésive est à base d'un polyuréthane thermoplastique.

10. Feuille selon une des revendications 1 à 8, caractérisée en ce que la couche adjacente présente des propriétés d'absorbeur d'énergie.

11. Feuille selon une des revendications 1 à 9, caractérisée en ce que la couche adjacente est en polyuréthane.

12. Feuille selon une des revendications 1 à 11, caractérisée en ce qu'elle comprend en outre, sur la face de la couche adjacente qui n'est pas munie de la couche adhésive, une couche de polyuréthane thermodurci ayant des propriétés de surface et en ce qu'elle est utilisable dans la fabrication d'un vitrage asymétrique.

13. Vitrage feuilleté caractérisé en ce qu'il comprend un substrat en verre adhésivement lié, par la couche adhésive de celle-ci, à une feuille de matière plastique selon l'une des revendications 1 à 12.

## Patentansprüche

1. Kunststoffolie, welche vorgesehen ist, bei der Herstellung einer Verbundverglasung verwendet zu werden, die ein Glassubstrat und diese Folie umfaßt, wobei die Folie mindestens zwei Schichten, davon eine Haftschicht, die vorgesehen ist, mit dem Glassubstrat in Kontakt zu kommen, und eine andere Schicht umfaßt, die an die Haftschicht angrenzt, **dadurch gekennzeichnet, daß** wenigstens die an die Haftschicht angrenzende Schicht einen Haftvermittler enthält, der mindestens ein Organosilan enthält, das mit eventuellen funktionellen Gruppen der Komponenten der angrenzenden Schicht im wesentlichen nicht reaktiv ist.

2. Folie nach Anspruch 1, **dadurch gekennzeichnet, daß** die angrenzende Schicht und die Haftschicht beide ein Organosilan enthalten.

3. Folie nach Anspruch 1 oder 2, **dadurch gekennzeichnet, daß** die Dicke der angrenzenden Schicht größer als die der Haftschicht ist.

4. Folie nach einem der Ansprüche 1 bis 3, **dadurch gekennzeichnet, daß** die Dicke der Haftschicht weniger als 50 µm beträgt.

5. Folie nach Anspruch 4, **dadurch gekennzeichnet, daß** die Dicke der Haftschicht 2 bis 20 µm beträgt.

6. Folie nach einem der Ansprüche 1 bis 5, **dadurch gekennzeichnet, daß** das Organosilan aus den Epoxysilanen, Methacrylsilanen und Vinylsilanen ausgewählt ist.

7. Folie nach Anspruch 6, **dadurch gekennzeichnet, daß** das Organosilan y-Glycidoxypropyltrimethoxysilan ist.

8. Folie nach einem der Ansprüche 1 bis 7, **dadurch gekennzeichnet, daß** das Organosilan mit einem Anteil von 0,01 bis 0,5 Gew.-% der Schicht verwendet wird, die es enthält.

9. Folie nach einem der Ansprüche 1 bis 8, **dadurch gekennzeichnet, daß** die Haftschicht auf Basis eines thermoplastischen Polyurethans ist.

10. Folie nach einem der Ansprüche 1 bis 8, **dadurch gekennzeichnet, daß** die angrenzende Schicht energieabsorbierende Eigenschaften besitzt.

11. Folie nach einem der Ansprüche 1 bis 9, **dadurch gekennzeichnet, daß** die angrenzende Schicht aus Polyurethan besteht.

12. Folie nach einem der Ansprüche 1 bis 11, **dadurch gekennzeichnet, daß** sie außerdem auf der Seite der angrenzenden Schicht, die nicht mit der Haftschicht versehen ist, eine duroplastische Polyurethanschicht mit Oberflächeneigenschaften umfaßt, und daß sie bei der Herstellung einer asymmetrischen Verglasung verwendbar ist.

13. Verbundverglasung, **dadurch gekennzeichnet, daß** sie ein Glassubstrat umfaßt, das mit einer Kunststoffolie nach einem der Ansprüche 1 bis 12 durch deren Haftschicht adhäsiv verbunden ist.

## Claims

1. Plastics material sheet for use in the manufacture of a laminated glazing comprising a glass substrate and said sheet, said sheet comprising at least two layers, including an adhesive layer for coming into contact with the glass substrate and another layer, adjacent to the adhesive layer, characterized in that at least the layer adjacent to the adhesive layer contains a coupling agent incorporating at least one organosilane, which is essentially non-reactive with possible functional groups of components of the adjacent layer.

2. Sheet according to claim 1, characterized in that the adjacent layer and the adhesive layer in each case contain an organosilane.

3. Sheet according to one of the claims 1 or 2, characterized in that the adjacent layer has a thickness exceeding that of the adhesive layer.

4. Sheet according to one of the claims 1 to 3, characterized in that the adhesive layer has a thickness below 50 µm.

5. Sheet according to claim 4, characterized in that the adhesive layer has a thickness between 2 and 20 µm.

6. Sheet according to one of the claims 1 to 5, characterized in that the organosilane is chosen from among epoxy silanes, methacrylic silanes and vinyl silanes.

7. Sheet according to claim 6, characterized in that the organosilane is gamma-glycidoxypropyl trimethoxy silane.

8. Sheet according to one of the claims 1 to 7, characterized in that the organosilane is used at a rate of 0.01 to 0.5% of the weight of the layer containing it.

9. Sheet according to one of the claims 1 to 8, characterized in that the adhesive layer is based on thermoplastic polyurethane.

10. Sheet according to one of the claims 1 to 8, characterized in that the adjacent layer has energy absorbing properties.

11. Sheet according to one of the claims 1 to 9, characterized in that the adjacent layer is of polyurethane.

12. Sheet according to one of the claims 1 to 11, characterized in that it also comprises, on the face of the adjacent layer not provided with the adhesive layer, a thermoset polyurethane layer having surface properties and in that it is usable in the manufacture of an asymmetrical glazing.

13. Laminated glazing characterized in that it comprises a glass substrate adhesively bonded, by the adhesive layer thereof, to a plastics material sheet according to one of the claims 1 to 12.
